# EUROPÄISCHE PATENTSCHRIFT

(11) **EP 2 289 078 B1**
(45) Veröffentlichungstag und Bekanntmachung des Hinweises auf die Patenterteilung: **15.11.2017**
(21) Anmeldenummer: 09768896.4
(22) Anmeldetag: 03.06.2009
(51) Int. Cl.: H01F 7/126, H01F 7/08, F16K 31/06, H01F 7/16

(54) **BETÄTIGUNGSVORRICHTUNG**
ACTUATING DEVICE
DISPOSITIF D'ACTIONNEMENT

(30) Priorität: 26.06.2008 DE 102008030451
(43) Veröffentlichungstag der Anmeldung: 02.03.2011
(73) Patentinhaber: Hydac Electronic GmbH, 66128 Saarbrücken (DE)
(72) Erfinder: BILL, Martin, 66625 Nohfelden (DE); LAUER, Florian, 66571 Eppelborn (DE); MEYER, Christoph, 66123 Saarbrücken (DE)
(74) Vertreter: Bartels & Partner
(86) Internationale Anmeldenummer: PCT/EP2009/003939
(87) Internationale Veröffentlichungsnummer: WO 2009/156047

(56) Entgegenhaltungen:
- DE-A1-102004 051 332
- DE-A1-102005 061 184
- US-A1- 2004 021 104
- US-B1- 6 683 519

## Beschreibung

Die Erfindung betrifft eine Betätigungsvorrichtung, insbesondere zum Betätigen von außenseitig anschließbaren Ventilen, mit einem Gehäuse und einem darin angeordneten Spulenkörper mit Spulenwicklung, der zumindest teilweise ein Polrohr umfaßt, an dessen einem freien Ende sich ein Polkern anschließt, mit einem zumindest im Polrohr innerhalb eines Ankerraumes längsverfahrbar geführten Magnetanker, der mit einem Betätigungsteil für das Betätigen des jeweiligen Ventilteils zusammenwirkt, wobei das Polrohr in der Art einer Aufnahmehülse für den Magnetanker ausgebildet ist, die mit ihrem freien Endbereich an einer Festlagerstelle festgelegt ist.

Durch die DE 10 2004 051 332 A1 ist eine gattungsgemäße Betätigungsvorrichtung bekannt. Bei der bekannten Lösung ist das Polrohr an seinem einen freien Ende, das aus dem Gehäuse der Betätigungsvorrichtung herausragt, mit einem umgelegten Rand versehen, gegen den der Magnetanker sich in seiner einen endseitigen Verfahrstellung abstützen kann, wobei der Umlegerand eine Mittenöffnung freiläßt, in die ein Druckausgleichskanal des Magnetankers einmündet, der sich auf seiner gegenüberliegenden Seite an dem Polkern abstützen kann, in dessen Richtung insoweit der Druckausgleichskanal auf seiner anderen Seite hin ausmündet. Insoweit ist durch den Spulenkörper und von Gehäuseteilen begrenzt für den nach außen weisenden freien Endrand des Polrohres eine Loslagerstelle gebildet.

Am gegenüberliegenden Ende weist das Polrohr einen in die entgegengesetzte Richtung weisenden Umlegerand geringerer Krümmung auf, mit der es zwischen dem Spulenkörper und dem Polkern sowohl axial als auch radial in einer Festlagerstelle lagefixiert ist. Aufgrund der Umlenkungen zu den freien Rändern des Polrohres hin, das in der Art einer Aufnahmehülse für den längsverfahrbaren Magnetanker ausgebildet ist, ist das Polrohr in der Lage, einen gewissen Toleranzlängenausgleich herzustellen, um dergestalt einen paßgenauen Einbau für die Teile der Betätigungsvorrichtung zu schaffen. Aufgrund der definierten Einspannstelle der Aufnahmehülse als Polrohr an der Festlagerstelle zwischen Polkern und Spulenkörper sind die dahingehenden Toleranzausgleichsmöglichkeiten aber eingeschränkt. Um das Innere der Betätigungsvorrichtung gegenüber der Umgebung abzudichten, ist am Innenumfang der Aufnahmehülse als Polrohr ein Dichtsystem vorhanden, vorzugsweise in Form eines Elastomer-Dichtringes, der in einer Außennut des Polkerns angebracht die Dichtung zwischen dem Polkern und dem Polrohr sicherstellt. Ist der Elastomer-Dichtring nicht richtig eingebaut oder wurde er beim Einbau vergessen, kann es zu einem Versagen der Dichtstelle kommen und das Innere der Betätigungsvorrichtung ist nicht mehr mediendicht gegenüber der Umgebung abgedichtet. Der dahingehende Versagensfall kann auch eintreten, wenn durch lang andauernden Gebrauch das Dichtsystem verschlissen und mithin unbrauchbar geworden ist.

Um dem Nachteil der eingeschränkten Toleranzausgleichsmöglichkeit zu begegnen, ist in der DE 10 2005 061 184 A1 bei einer gleichfalls gattungsgemäßen Betätigungsvorrichtung vorgeschlagen worden, den vorstehend genannten Umlegerand des Polrohres als geschlossenes Bodenteil einer Aufnahmehülse auszubilden, das vom Polkern abgestützt mit diesem in Anlage ist, wobei das Bodenteil des Polrohres derart in den Polkern einpaßbar ist, dass es seine Lage beibehält, auch wenn der Magnetanker für eine Betätigung eines an die Betätigungsvorrichtung anschließbaren Ventils sich hin und her bewegt und dabei insbesondere auf das Bodenteil drückt oder sich ziehend von diesem abhebt. Da der Umlegerand nicht mehr, wie vorstehend aufgezeigt, eine ringförmige Durchlaßstelle begrenzt, sondern vielmehr geschlossen ist, ist insoweit auch ein Einsatz für hohe Drücke möglich, da insoweit neben der Druckdichtheit auch ein steifes belastbares Polrohrsystem ausgebildet ist.

Durch die definierte Anlage des Bodenteils des Polrohres am Polkern ist eine Art Fixierung erreicht, die an anderer Stelle des Polrohres in einem weit gezogenen Bereich die Möglichkeit eines Toleranzausgleichs eröffnet. Hierbei ist vorgesehen, dass das Polrohr an seinem freien Ende in einen sickenförmigen Flansch ausmündet, der sich an dem Gehäuse der Betätigungsvorrichtung abstützt. Das Sickenteil des Flansches ist dabei in der Art einer Rundsicke ausgebildet, was es ermöglicht, einen freien Endbereich des sickenförmigen Flansches zwischen Gehäuse der Betätigungsvorrichtung und Gehäuseteile des sich anschließenden Ventilkörpers durch Klemmung lagezufixieren, und aufgrund des elastisch nachgiebigen Sickenkörpers ist eine Art Gelenkstelle realisiert, längs der sich insbesondere in axialer Richtung das Polrohr mit seiner Einbaulänge innerhalb des Spulenkörpers und des Polkerns anpassen kann. Zwischen dem elastisch nachgiebigen Sickenkörper und dem angeschlossenen Ventilgehäuse des Ventils ist wiederum ein Elastomer-Dichtring angeordnet, der eine mediendichte Abdichtung zwischen dem Inneren von Betätigungsvorrichtung nebst Ventil gegenüber der Umgebung sicherstellen soll. Auch dieses bekannte Dichtsystem kann zu den bereits beschriebenen Nachteilen der fehlenden Mediendichtheit führen.

Ausgehend von diesem Stand der Technik liegt der Erfindung die Aufgabe zugrunde, die bekannten Lösungen unter Beibehalten ihrer Vorteile, nämlich insbesondere einen funktionssicheren, lang andauernden Betätigungsbetrieb sicherzustellen, dahingehend weiter zu verbessern, dass mit geringern, konstruktiven Aufwand und mithin kostengünstig eine mediendichte Trennung von dem Inneren der Betätigungsvorrichtung gegenüber der Umgebung erreicht ist. Eine dahingehende Aufgabe löst eine Betätigungsvorrichtung mit den Merkmalen des Patentanspruches 1 in seiner Gesamtheit.

Dadurch, dass gemäß dem kennzeichnenden Teil des Patentanspruches 1 die Festlagerstelle aus zwei Anlageteilen des Polkerns gebildet ist, die zwischen sich einen Aufnahmespalt begrenzen, in dem der freie Endbereich der Aufnahmehülse geklemmt festgelegt ist, ist eine mediendichte Trennung zwischen dem Inneren der Betätigungsvorrichtung und der Umgebung erreicht. Für eine mediendichte Trennung trägt auch mit dazu bei, dass die Aufnahmehülse in ihrer bevorzugten Ausgestaltung topfartig ausgebildet ist und mithin über ein in sich geschlossenes Bodenteil verfügt. Das gesamte Polrohr braucht im Hinblick auf die spezielle Ausgestaltung der Festlagerstelle entlang des Innenumfanges kein weiteres Dichtsystem, das insoweit auch nicht versagen oder vergessen werden kann. Im übrigen spart die dahingehende Lösung unter Wegfall des zusätzlich benötigten Dichtsystems für das Polrohr Herstell- und Montagekosten.

Bei einer bevorzugten Ausführungsform der erfindungsgemäßen Betätigungsvorrichtung ist das eine Anlageteil aus einer Verengungsstelle des Polkerns gebildet, die im Durchmesser kleiner ist als der sonstige Außendurchmesser des Polkerns im Bereich der Festlagerstelle, wobei der hieraus entstehende stufenförmige Übergangsbereich eine Stemmfläche als das weitere Anlageteil des Polkerns ausbildet. Demgemäß läßt sich eine medien-, insbesondere gasdichte Festlagerstelle erreichen, indem man in einem ersten Herstellschritt den eingebördelten Endrand des Polrohres in die Verengungsstelle einlegt und in einem zweiten Schritt den stufenförmigen Übergangsbereich über die Außenseite des Polrohres darüberliegend verstemmt, so dass eine form- und kraftschlüssige Verbindung erreicht ist. Die dahingehenden Herstellschritte lassen sich in kostengünstiger Weise realisieren.

Bei einer weiteren bevorzugten Ausführungsform der erfindungsgemäßen Betätigungsvorrichtung ist vorgesehen, dass an einer Loslagerstelle für die Aufnahmehülse an dieser ein Rückstellmittel angreift, das eine Kraft auf die Aufnahmehülse ausübt, die von der Festlagerstelle weggerichtet ist. Hierdurch läßt sich in einem sehr weit gezogenen Rahmen ein Toleranzausgleich für das Gesamtsystem erreichen, wobei die dahingehende Ausgleichsgröße sich über eine geeignete Wahl des Rückstellmittels vorgeben läßt. Unabhängig von etwaigen Herstelltoleranzen der einzelnen Baukomponenten der Betätigungsvorrichtung ist somit die damit einhergehende Toleranz über das an der Aufnahmehülse angreifende Rückstellmittel kompensierbar und insoweit individuell ausgleichbar.

Obwohl das Rückstellmittel derart versucht, das Pol rohr aus der Festlagerstelle zu ziehen, berührt dies die mediendichte Klemmung über das verstemmte Polkernmaterial nicht, da in der Art eines Gegen- oder Widerlagers der freie Endbereich des Polrohres über einen bogenförmigen Übergangsbereich aus der Verengungsstelle heraus in eine Führungsstrecke überführt ist, die mit einem gegenüber dem Außendurchmesser der Verengungsstelle verbreiterten Durchmesser über eine längere Wegstrecke eine Permanentanlage zwischen Polrohr und Polkern in diesem Bereich vorsieht und soweit eine Entlastung für die Festlagerstelle mit gewährleistet. Durch die genannte axial verlaufende Führungsstrecke, die in den gebogenen Übergangsbereich übergeht, ist darüber hinaus eine längere Dichtstrecke realisiert, die als Austrittshindernis für das jeweilige Medium auch in Form von Gas wirkt.

Bei einer weiteren, besonders bevorzugten Ausführungsform der erfindungsgemäßen Betätigungsvorrichtung ist die Festlagerstelle für die Aufnahmehülse an ihrem freien Endrand vorgesehen und mit dem Polkern, wie aufgezeigt, entsprechend verstemmt. Die Loslagerstelle ist am gegenüberliegenden Ende des Polrohres im Bereich des geschlossenen Bodenteils angeordnet, insbesondere an der Stelle, an der das Polrohr aus dem Gehäuse der Betätigungsvorrichtung austritt und die Lagerung ist durch den Spulenkörper und/oder durch die Gehäuseteile erreicht, die von dem Polrohr durchgriffen sind. Durch den Angriff des Rückstellmittels, vorzugsweise in Form eines Energiespeichers, beispielsweise in der Art einer Tellerfeder an der Loslagerstelle, wird die Aufnahmehülse mit ihrem Innenumfang entsprechend langgezogen und gleicht etwaige Unebenheiten entlang ihres Innenumfanges aus. Auch wird insoweit die Aufnahmehülse als Polrohr permanent unter Zugspannung gehalten, so dass eine dichtende Anlage zwischen Innenumfang des Polrohres und dem Außenumfang des Polkerns entlang der genannten Führungsstrecke erreicht ist. Da insbesondere die Elastomerteile eines Dichtsystems unter Anlage mit metallischen Wandteilen Schaden nehmen können, ist durch das Weglassen eines dahingehenden Dichtsystems im metallischen Wandbereich die angestrebte Mediendichtheit sichergestellt.

Weitere vorteilhafte Ausgestaltungen der erfindungsgemäßen Betätigungsvorrichtung sind Gegenstand der sonstigen Unteransprüche.

Im folgenden wird die erfindungsgemäße Ausführungsform anhand von Ausführungsbeispielen nach der Zeichnung näher erläutert. Dabei zeigen in prizipieller und nicht maßstäblicher Darstellung die
- Fig. 1: in der Art eines Längsschnittes die Betätigungsvorrichtung als Ganzes, jedoch ohne angeschlossene Ventileinrichtung;
- Fig.2: einen vergrößerten Ausschnitt gemäß Kreisdarstellung D in Fig.1;
- Fig.3: in der Art eines Längsschnittes einen Teil der Herstellform betreffend den Anspritzvorgang eines Betätigungsteils an den Magnetanker der Betätigungsvorrichtung;
- Fig.4a,4b und 4c: im Längsschnitt, in perspektivischer Draufsicht sowie in Vorderansicht eine gegenüber den Fig.1 bis 3 geänderte zweite Ausführungsform einer Anspritzlösung;
- Fig. 5a,5b und 5c: in entsprechender Darstellung zu den Fig.4a, 4b und 4c eine dritte Ausführungsform einer Anspritzlösung;
- Fig.6a,6b,6c: eine zu den Fig.4a, 4b und 4c entsprechende Darstellung einer vierten Ausführungsform der Anspritzlösung;
- Fig.7: einen vergrößerten Ausschnitt gemäß Kreisdarstellung A in Fig.1;
- Fig.8: einen vergrößerten Ausschnitt gemäß Kreisdarstellung B in Fig.1;
- Fg.9: einen vergrößerten Ausschnitt gemäß Kreisdarstellung C in Fig.1;
- Fig.10 und 11: in der Art einer Längsschnittdarstellung die einzelnen Herstellschritte für die Detaillösung gemäß Kreisdarstellung C nach Fig.9.

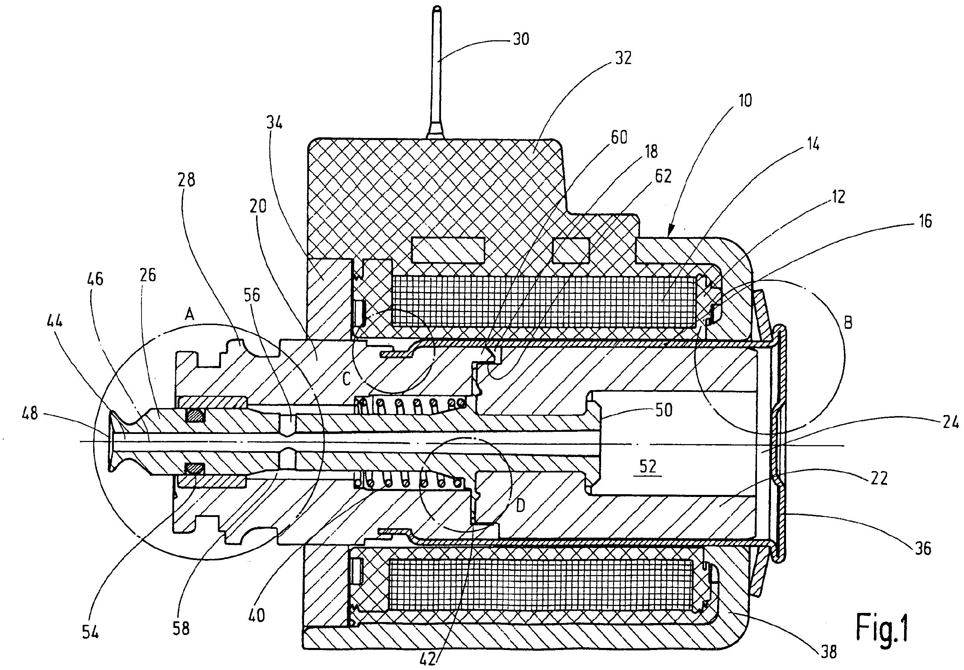

Die in der Fig.1 im Längsschnitt dargestellte Betätigungsvorrichtung, die man in der Fachsprache auch mit "Betätigungs- oder Schaltmagnet" bezeichnet, weist ein als Ganzes mit 10 bezeichnetes Gehäuse auf mit einem darin angeordneten Spulenkörper 12 mit Spulenwicklung 14. Der dahingehende Spulenkörper 12 umfaßt zumindest teilweise ein Polrohr 16, das mittels einer Trennstelle 18 in Form einer freigelassenen Stelle magnetisch von einem Polkern 20 im wesentlichen entkoppelt ist. Es sind im Stand der Technik aber auch Lösungen (nicht dargestellt) bekannt, bei denen eine korrespondierende Trennstelle durch eine Schweißnaht od. dgl. gebildet ist. Längs des Polrohres 16 ist ein Magnetanker 22 in einem Ankerraum 24 längsverfahrbar geführt, der an seinem einen freien, stirnseitigen Ende mit einem stangenartigen Betätigungsteil 26 zusammenwirkt zum Betätigen von Fluidventilen (nicht dargestellt) üblicher Bauart, insbesondere in Form von nicht näher dargestellten Pneumatik-Ventilen. Zum Anschließen eines dahingehenden Ventils ist der Polkern 20 an seinem freien Ende mit einem Anschlußflansch 28 versehen. Der Anschlußflansch 28 weist an seinem Außenumfang vertiefte Ringnuten auf zur zumindest teilweisen Aufnahme von entsprechenden Elastomer-Dichtringen und zum Führen von Medienströmen.

Zum Bestromen der Spulenwicklung 14 des Spulenkörpers 12, die bevorzugt aus mindestens einem leitfähigen Kupferdraht besteht, ist ein Stekerteil 30 vorgesehen, das vorzugsweise über eine Vergußmasse 32 mit den sonstigen Gehäuseteilen des Gehäuses 10 fest verbunden ist. In Blickrichtung auf die Fig.1 gesehen ist auf der linken Seite und nach außen hin mit der Vergußmasse 32 abschließend eine ringförmigen Polplatte 34 eingesetzt, die für ihren festen Halt im Gehäuse 10 mit diesem entsprechend verstemmt ist (nicht dargestellt). Im übrigen umfaßt die Polplatte 34 den Außenumfang des Polkerns 20, der insoweit über die nicht näher dargestellte Ventileinrichtung in seiner in der Fig.1 gezeigten Einbaulage in der Betätigungsvorrichtung gehalten ist. Das Polrohr 16 ist topfartig in der Art einer Aufnahmehülse ausgebildet und das Bodenteil 36 des Polrohres 16 bildet insoweit eine Anschlagbegrenzung für den Magnetanker 22 in seiner in Blickrichtung auf die Fig.1 gesehen äußerst rechten Verfahrstellung aus. Die Vergußmasse 32 nebst Spulenkörper 12 bestehen aus einem Kunststoffmaterial, beispielsweise Polyamid, vorzugsweise aus PA6. Die Vergußmasse 32 auf der Oberseite der Betätigungsvorrichtung greift entlang ihrer Unterseite in Ausnehmungen eines topfartigen Gehäusemantels 38 ein, der gleichfalls Bestandteil des Gehäuses 10 ist. Sowohl Gehäusemantel 38 als auch Magnetanker 22 sowie Polkern 20 und Polplatte 34 bestehen aus einem metallischen Material, wobei alle genannten Teile aus demselben Material bestehen können. Das Polrohr 16 ist bevorzugt aus einem Edelstahlmaterial erstellt, das in Abhängigkeit des Einsatzzweckes magnetisch leitend oder nichtleitend ausgebildet sein kann.

Wird über das Steckerteil 30 die Spulenwicklung 14 und mithin die Spule bestromt, wird der Magnetanker 22 in seine in der Fig.1 gezeigte betätigte Stellung verfahren, also in Blickrichtung auf die Fig.1 gesehen von einer rechten Stellung in eine linke, die insoweit der Betätigungsstellung nach der Fig.1 entspricht. Bei der dahingehenden Verfahrbewegung nimmt der Magnetanker 22 das stangenförmige Betätigungsteil 26 mit, dessen freies Ende für einen Betätigungsvorgang an dem nicht näher dargestellten PneumatikVentil in jeder seiner Verfahrstellungen aus dem Gehäuse 10 und insbesondere aus dem Polkern 20 herausragt. Bei der dahingehenden Verfahrbewegung des Magnetankers 22 in Blickrichtung auf die Fig.1 gesehen nach links wird ein Energiespeicher in Form einer Druckfeder 40 vorgespannt und sobald die Spulenwicklung 14 stromlos gehalten ist, schiebt die vorgespannte Druckfeder 40 den Magnetanker 22 in seine rechte Ausgangsstellung zurück, bei der er auch in Anlage mit der Innenseite des Bodenteils 36 des Polrohres 16 kommen kann. Im dahingehend stromlosen Zustand ist die angeschlossene Ventileinrichtung stromlos offengeschaltet. Bei einer geänderten Ausführungsform (nicht dargestellt) der erfindungsgemäßen Betätigungsvorrichtung könnte es auch vorgesehen sein, den Energiespeicher in Form der Druckfeder 40 in die angeschlossene Ventileinrichtung zu verlegen, um dergestalt die angesprochene Rückstellbewegung für den Magnetanker 22 nebst Betätigungsteil 26 zu veranlassen.

Selbst bei Wegfall des Stromes kann es aber aufgrund von Restmagnetismusvorgängen im Polkern 20 und in der Polplatte 34 dazu kommen, dass der Magnetanker 22 mit seiner einen freien Stirnseite an der ihm zugewandten benachbarten Stirnseite des Polkerns 20 haften bleibt. Um dies zu vermeiden, wird zwischen die beiden Stirnseiten innerhalb des Ankerraumes 22 eine Antihafteinrichtung 42 eingesetzt, die mit einem radialen Abstand das stangenartige Betätigungsteil 26 umfaßt, um so wirksam eine Entkopplung vorzunehmen. Das stangenartige Betätigungsteil 26 ist von einem Mittenkanal 44 durchgriffen, der sich entlang der Längsachse 46 von Magnetanker 22 und Betätigungsteil 26 erstreckt, die insoweit auch die mögliche Verfahrachse bildet. Der genannte Mittenkanal 44 tritt an den beiden gegenüberliegenden Stirnseiten 48,50 des Betätigungsteils 26 in die Umgebung aus. Insbesondere mündet der Mittenkanal 44 auf der rechten Stirnseite 50 des Betätigungsteils 26 in einen Freiraum 52 des Magnetankers 22 aus, wobei der Freiraum 52 insoweit druck- und medienführend wiederum in den Ankerraum 24 ausmündet. Im Bereich zwischen einer Dichtungsstelle 54, die insoweit auch eine Führung ausbildet für das vordere Ende der Betätigungsstange 26, und dem Magnetanker 22 ist ein Querkanal 56 vorhanden, der mit seinem einen Ende in den Mittenkanal 44 ausmündet und mit seinem anderen Ende in einen Mittenraum 58 austritt, der von dem Polkern 20 umfaßt ist.

Die Komponenten Mittenkanal 44, Querkanal 56, Mittenraum 58, Freiraum 52 sowie Ankerraum 24 bilden eine Art Druckausgleichssystem aus, das an die nicht näher dargestellte Ventileinheit angeschlossen ist und insofern von der Ventileinheit kommende Druckmedien dergestalt kompensiert, dass die Verfahrbewegung des Magnetankers 22 nebst Betätigungsteil 26 durch etwaige Druckdifferenzen nicht beeinträchtigt ist. Gegebenenfalls können die derart geführten Druckmedien auch aufgrund unterschiedlicher Flächenverhältnisse die aufzubringende Betätigungskraft seitens des Magnetankers 22 wirksam mit unterstützen. Im Bereich der Trennstelle 18 übergreift der Polkern 20 mit einem nasenartigen Ringvorsprung 60 die in diesem Bereich abgesetzte Stufung 62 des Magnetankers 22 derart, dass in jeder Verfahrstellung des Magnetankers 22 dieser innerhalb des Ringvorsprunges 60 geführt ist, so dass sich die Größe der Trennstelle 18 je nach Verfahrrichtung des Magnetankers 22 ändert.

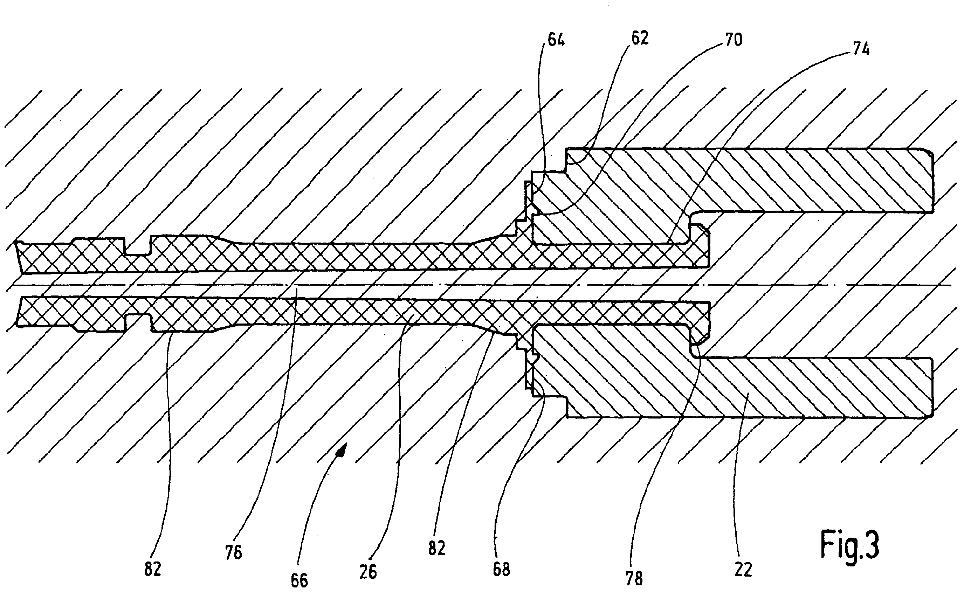

Das stangenartige Betätigungsteil 26 ist aus einem spritzbaren Material gebildet, das insbesondere gemäß Darstellung nach der Fig.3 in einem Verbindungsbereich 64 an den Magnetanker 22 angespritzt ist. Sofern hier von Anspritzen die Rede ist, schließt dies die üblichen Spritz-, Gieß- und Druckgießverfahren mit ein. Das spritzbare Material des Betätigungsteils 26 kann dem Grunde nach jedes derart verarbeitbare Material sein. Vorzugsweise wird jedoch ein Kunststoffmaterial eingesetzt, insbesondere ein thermoplastisch verarbeitbarer Kunststoff. Als besonders vorteilhaft hat sich der Einsatz von Polybutylenterephthalat (PBT) erwiesen, das ein Spritzgießen bei Massetemperaturen von 230°C bis 270°C erlaubt. Das eingesetzte Kunststoffmaterial weist die notwendige Festigkeit und Steifigkeit auf und das Gleit- und Verschleißverhalten hat sich in praktischen Versuchen für die hier vorliegende Anwendung als sehr gut erwiesen. Im vorliegenden Ausführungsbeispiel ist das gesamte Betätigungsteil 26 aus einem spritzbaren Kunststoffmaterial gebildet; es besteht hier aber auch die Möglichkeit, das Betätigungsteil 26 im vorderen Bereich aus einem üblichen metallischen Stangenwerkstoff zu bilden, der dann nur im Übergangsbereich zum Magnetanker 22 mittels spritzbarem Material angespritzt ist.

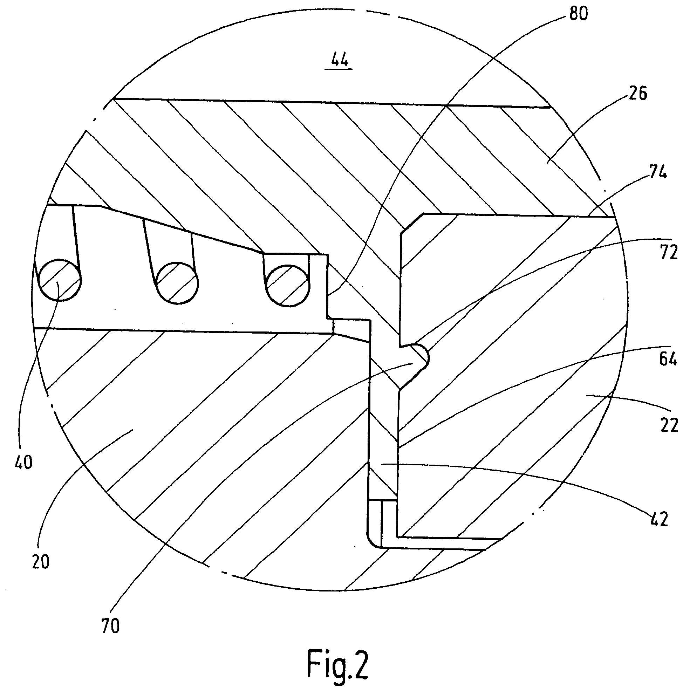

In der Fig.3 ist eine als Ganzes mit 66 bezeichnete Spritzgußform teilweise und von ihrem prinzipiellen Aufbau her dargestellt. Für einen Entformvorgang ist die dahingehende Spritzgußform 66 mehrteilig ausgebildet (nicht dargestellt) und läßt sich insoweit mit ihren Teilen zur Gesamtform gemäß der Darstellung nach der Fig.3 zusammensetzen. In die Spritzgußform 66 wird der metallische Magnetanker 22 eingelegt, der an seiner einen freien Stirnseite den Verbindungsbereich 64 ausbildet. Die derart gebildete mögliche Anspritzfläche 68 ist nach außen hin durch die Wandung der Spritzgußform 66 begrenzt und derart gewählt, dass diese jedenfalls nicht über die freie Stirnseite des Magnetankers 22 in diesem Bereich vorsteht. Ferner ist innerhalb der Anspritzfläche 68 in die freie Stirnseite des Magnetankers 22 eine umlaufende ringnutartige Vertiefung 70 eingebracht, die in vergrößerter Darstellung in der Fig.2 wiedergegeben ist und eine Art Hinterschnittgestaltung 72 ausbildet, damit das eingespritzte Kunststoffmaterial sich entsprechend unterhakend im Hinterschnitt im Magnetanker 22 entlang des Verbindungsbereichs 64 halten kann. Weiter weist der Magnetanker 22 eine zentral verlaufende Mittenöffnung 74 auf, die von dem Betätigungsteil 26 durchgriffen ist, wobei gemäß der Darstellung nach der Fig.3 ein entsprechend eingelegter Formkern 76 die dahingehende Ausgestaltung ermöglicht. Da die Mittenöffnung 74 in den sich erweiternden Freiraum 52 austritt, ist dort eine weitere Anlagefläche als zweite Anspritzfläche 78 des Magnetankers 22 ausgebildet. Im Bereich der zweiten Anspritzfläche 78 übergreift das Kunststoffmaterial des Befestigungsteils 26 die insoweit gebildete Verbreiterungsstufe, so dass in beiden Verfahrrichtungen des Magnetankers 22 eine sichere Verankerung des Betätigungsteils 26 über den Anspritzvorgang gewährleistet ist.

Die Spritzgußform 66 nach der Fig.3 ist derart ausgebildet, dass das stangenartige Betätigungsteil 26 sich radial nach außen hin verbreitert unter Ausbildung der bereits beschriebenen scheibenartigen Antihafteinrichtung 42. Insoweit ist der Polkern 20 vom Magnetanker 22 sicher entkoppelt und die Antihafteinrichtung 42 bildet auch eine Art Anschlagschutz für den Magnetanker 22 aus. Wie insbesondere die Fig.2 zeigt, ist zwischen der scheibenförmigen Antihafteinrichtung 42 und der sonstigen Umfassungsfront des Betätigungsteils 26 eine Anlagestufe 80 eingebracht, an der sich das eine freie Ende des Kraftspeichers in Form der Druckfeder 40 abstützt. Insoweit ist die eigentliche Antihafteinrichtung 42 von der Krafteinleitung der Druckfeder 40 entlastet, die im übrigen in jeder Verfahrstellung des Magnetankers 22 das stangenartige Betätigungsteil 26 in Richtung des Verbindungsbereiches 64 des Magnetankers 22 drückt. Wie sich des weiteren aus den Fig.1 und 3 ergibt, verjüngt sich der Mittenraum 58 zu beiden Seiten hin, indem das stangenartige Betätigungsteil 26 entlang von zwei Übergangsbereichen 82 sich im Durchmesser konisch verbreitert.

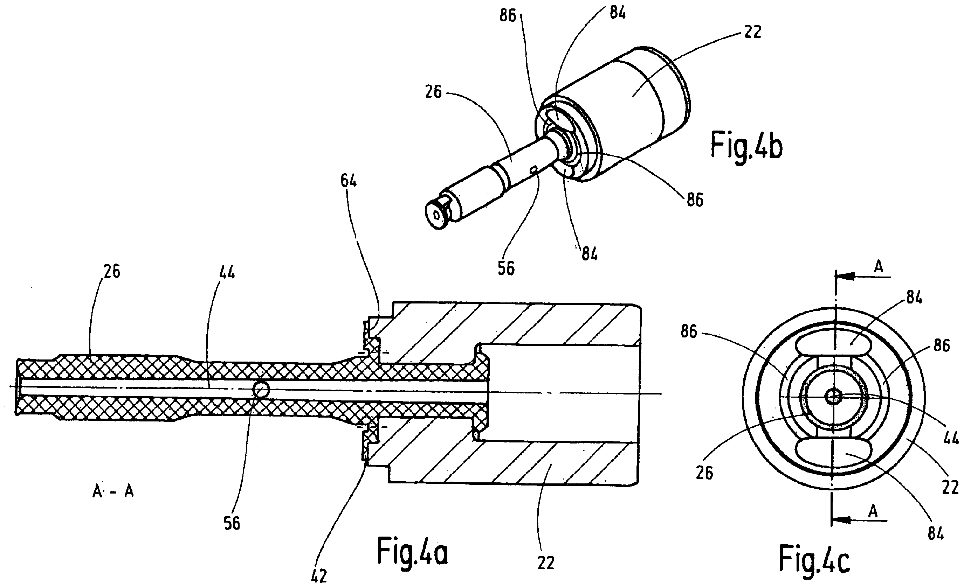

Die Ausführungsform nach der Fig.4 ist jedenfalls insoweit abgeändert, als im Verbindungsbereich 64 das angespritzte Kunststoffmaterial zur Erhöhung der Anbindungsmasse nierenartige Verbreiterungen 84 aufweist, wobei wiederum die Antihafteinrichtung 42 einstückiger Bestandteil des Betätigungsteils 26 ist. Durch die diametral einander gegenüberliegenden ringartigen Vertiefungsstellen 86, die sich kreissegmentartig an die Nieren 84 beidseits anschließen, braucht der Energiespeicher in Form der Druckfeder 40 nicht insgesamt auf dem angespritzten Kunststoffmaterial aufzuliegen, sondern kann sich für eine verbesserte Abstützung an den Metallbereichen des Magnetankers 22 direkt abstützen.

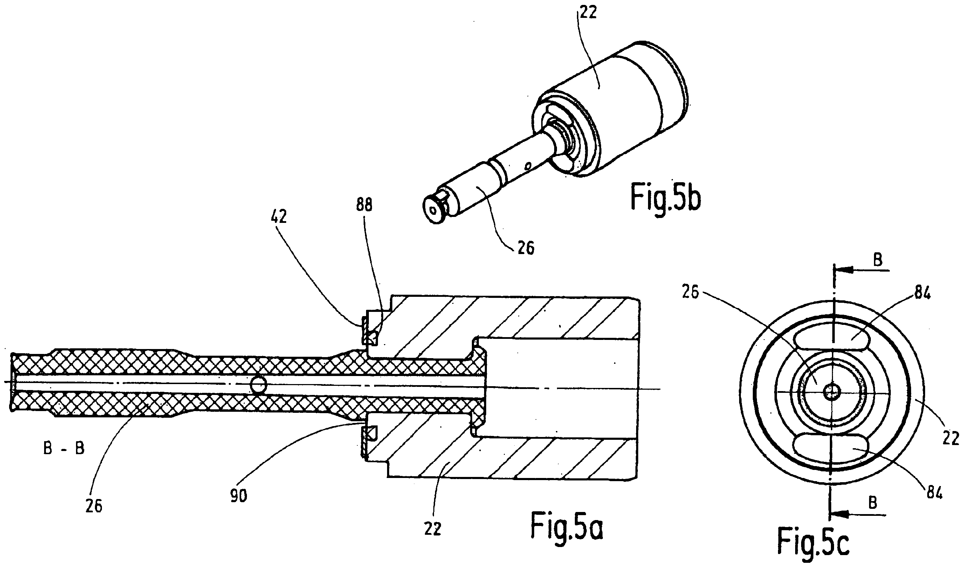

Die Ausführungsform nach den Figuren 5 entspricht vom grundsätzlichen Aufbau her der Ausführungsform nach den Figuren 4; allein ist hier die Antihafteinrichtung 42 als Antiklebscheibe über eine entsprechende Eingreifstelle 88 mit dem Magnetanker 22 stirnseitig fest verbunden. Im dahingehenden Fall liegt die Druckfeder 40 mit ihrem einen Ende direkt an der Stirnseite des Magnetankers 22 an, und zwar im Bereich des Ringspaltes 90, gebildet durch den Zwischenabstand von Außenumfang des Befestigungsteils 26 zum Innenumfang der eigenständig ausgebildeten Antiklebscheibe der Antihafteinrichtung 42.

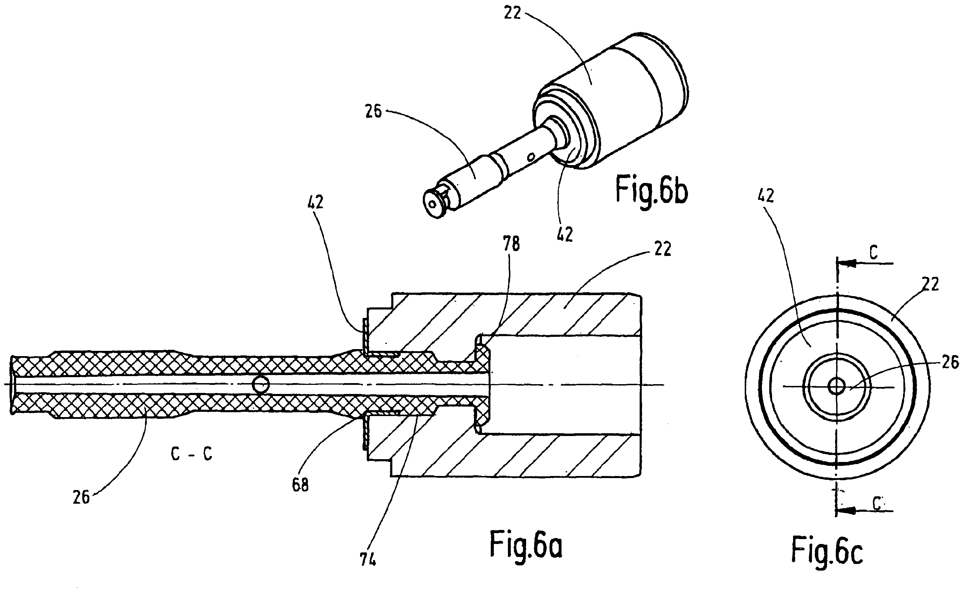

Bei der Ausführungsform nach den Fig.6 wiederum ist die Antihafteinrichtung 42 aus einem Antiklebtopf gebildet, der mit seinem radialen Umfassungsrand an der Stirnseite des Magnetankers 22 anliegt und ansonsten mit seinem zylindrisch eingewölbten Bodenteil in die Mittenöffnung 74 des Magnetankers 22 eingreift. Insoweit liegt das Betätigungsteil 26 mit seinem anspritzbaren Kunststoffmaterial nur im Bereich der zweiten Anspritzfläche 78 direkt am Magnetanker 22 an und die erste Anspritzfläche 68 ist gebildet durch die Anlage an die Oberseite der genannten Antihafteinrichtung 42.

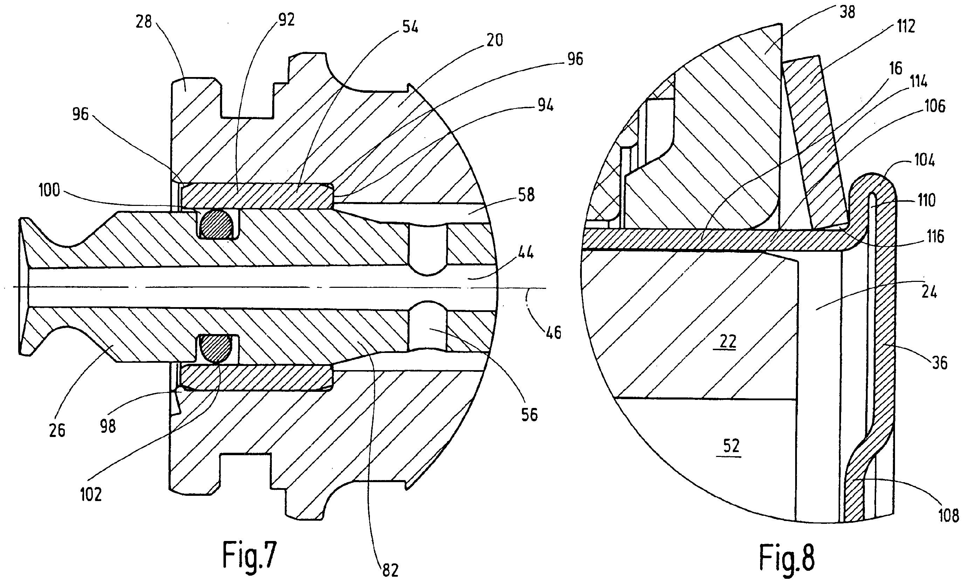

Die Darstellung nach der Fig.7 zeigt die Betätigungsvorrichtung mit der Dichtungsstelle 54, die den Mittenraum 58 gegenüber dem freien Umgebungsraum nach außen hin abdichtet, in den das freie Ende des Betätigungsteils 26 hineinragt. Die genannte Dichtungsstelle 54 ist aus einem Ringkörper 92 gebildet, der in eine absatzartige Verbreiterung 94 am freien Ende des Polkerns 20 eingesetzt, insbesondere dort eingepreßt ist. Für den dahingehenden Einpreßvorgang weist der Ringkörper 92 zu seinen beiden freien Enden hin konische Einführhilfen 96 auf. Der Ringkörper 92 ist aus einem Werkstoff mit guten Dicht- und Gleiteigenschaften gebildet, wobei neben spritzbaren Kunststoffen, wie Polyamid, auch durchaus Buntmetallmaterialien zum Einsatz kommen könnten. Sofern besonders gute Gleiteigenschaften verlangt werden, kann auch ein PTFE-Werkstoff den Ringkörper 92 ausbilden. Damit der Ringkörper 92 sicher in der Aufnahme im Polkern 20 verbleibt, kann darüber hinaus der Polkern 20 längs seines freien Innenbereiches zumindest teilweise eingebördelt werden, so dass Bördelrandabschnitte 98 nach außen hin eine wirksame Anschlagbegrenzung ausbilden. Anstelle einer abschnittsweisen Ausgestaltung kann der Bördelrand auch umlaufend ausgebildet sein.

Wie weiter die Darstellung nach der Fig.7 verdeutlicht, ist in eine Ringnut 100 ein Elastomerdichtring 102 eingebracht, der insoweit eine Abdichtung zwischen Mittenraum 58 und der freien Umgebung mit sicherstellt. Darüber hinaus ist zwischen Ringnut 100 und benachbartem Übergangsbereich 82 des Betätigungsteils 26 der Durchmesser des Betätigungsteils verbreitert und insoweit in direkter Gleitanlage mit der Innenseite des vorzugsweise als Preßhülse ausgebildeten Ringkörpers 92, was zum einen eine zusätzliche Abdichtung neben dem Elastomerdichtring 102 ergibt und im übrigen eine exakte endseitige Führung für das Betätigungsteil 26 sicherstellt entlang der Längs- oder Verfahrachse 46. Auf der abgewandten Seite zu dem Übergangsbereich 82 ist hingegen der Außendurchmesser des Betätigungsteils 26 verringert, um so einen hemmfreien Betrieb sicherzustellen und den Einfahrvorgang des Betätigungsteils 26 an der Stelle des Übergangs zum Ringkörper 92 nicht zu beeinträchtigen.

Wie insbesondere die Fig.8 in Verbindung mit der Fig.1 zeigt, ist das Polrohr 16, das in Blickrichtung auf die Figuren gesehen am rechten Rand aus dem Gehäusemantel 38 des Gehäuses 10 austritt, mit einem verbreiterten und umgelenkten Rand 104 versehen, der insoweit sich mit einem vorgebbaren axialen Abstand zu der Außenwand des Gehäusemantels 38 erstreckt. Die dahingehende Ausgestaltung bildet eine Art Loslagerstelle aus. Der insoweit gebildete Rand 104 bildet die Übergangsstelle aus zwischen der zylindrischen Polrohrwandung 106 und dem quer dazu verlaufenden Bodenteil 36. Zu seiner Mitte hin ist das Bodenteil 36 in Richtung des Ankerraums 24 mit einer Abkröpfung 108 versehen, die in einer rechten Anschlagstellung des Magnetankers 22 in dessen Freiraum 52 hineinragt. Ansonsten bildet das federelastisch nachgiebige Bodenteil 36 eine Anschlagdämpfung für den auftreffenden Magnetanker 22 aus, sofern dieser seine ganz rechte Verfahrstellung gemäß der Darstellung nach der Fig.1 einnimmt.

Der insoweit umgelegte Rand 104 begünstigt diesen Effekt durch Ausbilden einer federelastisch nachgiebigen Gelenkstelle. In den derart gebildeten Rand 104 mündet ein Umlaufspalt 110 ein, in den Medium gelangen kann, was wiederum der Aussteifung des Gesamtsystems in diesem Bereich zugute kommt. Von besonderem Vorteil ist aber, dass für das Polrohr 16 in jedem Temperaturzustand ein Toleranzausgleich geschaffen ist durch ein federelastisch nachgiebiges Rückstellmittel 112 in Form eines Energiespeichers, beispielsweise gebildet aus Bestandteilen einer Tellerfeder 114, von der in der Fig.8 ein Segmentteil dargestellt ist. Anstelle einer einzelnen Segment-Tellerfeder 114 gemäß der Darstellung nach der Fig.8 könnte dem Grunde nach aber auch ein Tellerfederpaket treten oder ein sonstiges Rückstellmittel, beispielsweise in Form einer üblichen Spiralfeder, die als Druckfeder wirkt. Auch könnte man an dieser Stelle einen Federbalg einsetzen oder einen vorgespannten Elastomerring, sofern dessen Einsatz aufgrund der herrschenden Temperaturen überhaupt möglich wäre.

Das Rückstellmittel 112, vorzugsweise in Form der Tellerfeder 114, greift mit seinem einen Ende wirksam an der freien Stirnseite des Gehäusemantels 38 an und stützt sich mit dem anderen freien Ende an einem Umlenkbereich 116 ab, an dem die zylindrische Polrohrwandung 106 in den vorkragenden Rand 104 übergeht. Im Hinblick auf ein hohes Maß an Korrosionsbeständigkeit ist das Polrohr 16 aus einem Edelstahlmaterial gebildet und das eingesetzte Rückstellmittel 112 hat auch noch den Vorteil, dass bei auftretenden Vibrationen an der Betätigungsvorrichtung das Polrohr 16 gegenüber dem Gehäuse 10 entkoppelt ist. Der nach rechts hin gewählte Überstand für den Rand 104 gegenüber der freien Stirnfläche des Gehäusemantels 38 ist derart gewählt, dass das jeweilige Rückstellmittel 112 mit seiner Vorspannung sicher am Polrohr 16 angreifen kann und dass dieses dennoch Bauraum sparend an dem sonstigen Gehäuse 10 anordenbar ist. Die genannte Abkröpfung 108 stellt darüber hinaus sicher, dass das Polrohr 16 in seinem dahingehenden Bodenteilbereich 36 verstärkt ist, so dass es bei einem etwaigen Anschlagen des Magnetankers 22 nicht zu bleibenden Verformungen kommen kann.

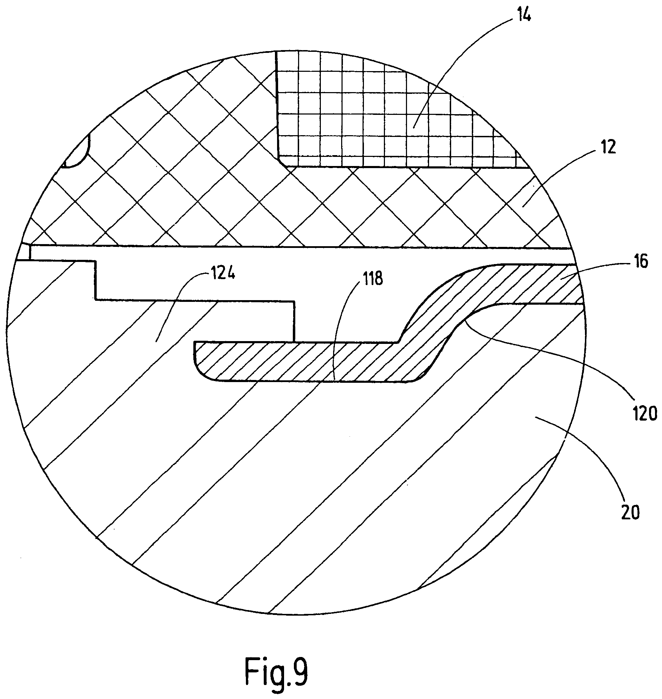

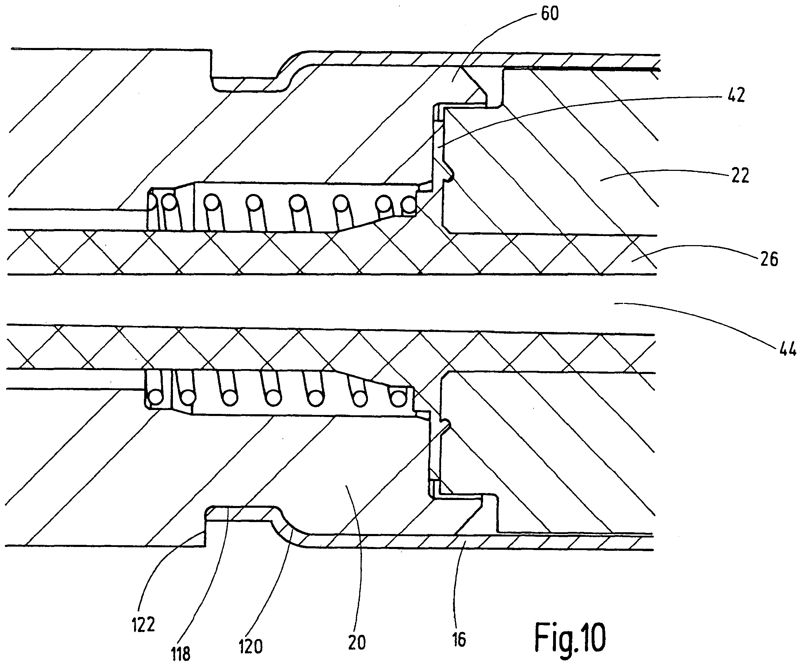

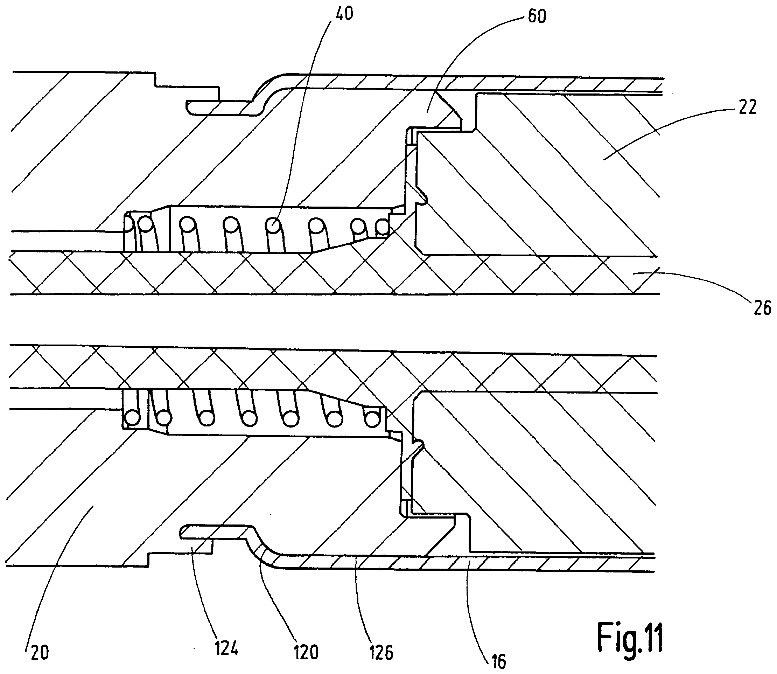

Die Lösung nach den Fig.9 bis 11 zeigt nun noch die linke Anbindungsstelle des Polrohres 16 am stationär angeordneten Polkern 20 in der Art einer Festlagerstelle. Hierfür weist der Polkern 20 in Richtung seines Ringvorsprunges 60 eine ringnutartige Verengungsstelle 118 auf, die in einem bogenförmigen Übergangsbereich 120 in den sonstigen Außendurchmesser des Polrohres 20 in Richtung des Ringvorsprunges 60 übergeht (vgl. Fig.1). Fig. 10 zeigt dabei, dass der dem bogenförmigen Übergangsbereich 120 abgewandte stufenförmige Übergangsbereich 122 zunächst unverformt ist und insoweit nur einen Anstoßbereich für das freie Ende des insoweit eingestemmten oder eingebördelten freien Endrandes des Polrohres 16 bildet. Ist dieser Herstellschritt insoweit vollzogen, wird gemäß der Darstellung nach der Fig.1 in einem zweiten Herstellschritt der stufenförmige Übergangsbereich 122 nach innen verstemmt, und zwar entlang einer Stemmfläche 124, die gegenüber dem sonstigen Außendurchmesser des Polkerns 20 in Richtung zur Polplatte 34 abgesetzt ist. Derart ist das freie Ende des Polrohres 16 von beiden Seiten her durch das in diesem Bereich verstemmte Polkernmaterial nicht nur axial und radial festgelegt, sondern auch gasdicht gehalten, d.h. die hier aufgezeigte Lösung kommt ohne zusätzliche Elastomerdichtung oder einem sonstigen Dichtsystem zwischen Polkern 20 im Bereich seines Ringvorsprunges 60 und der Festlegestelle am freien Endrand des Polrohres 16 aus.

Da die dahingehenden Betätigungsvorrichtungen auch teilweise im Hochtemperaturbereich eingesetzt werden, was grundsätzlich das Elastomermaterial von Dichtungen schädigt, ist insoweit eine kostengünstige Abdichtungsalternative realisiert. Durch den bogenförmigen Übergangsbereich 120 ist darüber hinaus das Polrohr ohne größere Knickstellen in Richtung des Ringvorsprunges 60 am Außenumfang des Polrohres 22 sicher geführt, so dass auch insoweit keine unnötige Materialbeanspruchung für das dünnwandige Polrohrmaterial auftritt. Im Hinblick auf diese Führungsstrekke 126 und die Führungszentrierung über das Rückstellmittel 112 am freien Endbereich des Polrohres 16 ist sichergestellt, dass es nicht zu Beulvorgängen kommt, die gegebenenfalls die freie Bewegbarkeit des Magnetankers 22 mit seinem Betätigungsteil 26 einschränken könnten.

Die erfindungsgemäße Betätigungsvorrichtung ist insbesondere im Niederdruckbereich für den Einsatzbereich bei Pneumatik-Ventilen auch im Hochtemperaturbereich bestimmt; bei entsprechender Modifizierung sind aber auch andere Anwendungen, insbesondere bei Hydraulikventilen, denkbar. Die sehr leichtgewichtige Betätigungsvorrichtung weist sehr kurze Schalt- und Reaktionszeiten auf und es lassen sich ausgesprochen hohe Lastwechsel erreichen, die im mehrstelligen Millionenbereich liegen können.

## Patentansprüche

1. Betätigungsvorrichtung, insbesondere zum Betätigen von außenseitig anschließbaren Ventilen, mit einem Gehäuse (10) und einem darin angeordneten Spulenkörper (12) mit Spulenwicklung (14), der zumindest teilweise ein Polrohr (16) umfaßt, an dessen einem freien Ende sich ein Polkern (20) anschließt, mit einem zumindest im Polrohr (16) innerhalb eines Ankerraumes (24) längsverfahrbar geführten Magnetanker (22), der mit einem Betätigungsteil (26) für das Betätigen des jeweiligen Ventilteils zusammenwirkt, wobei das Polrohr (16) in der Art einer Aufnahmehülse für den Magnetanker (22) ausgebildet ist, die mit ihrem freien Endbereich an einer Festlagerstelle festgelegt ist, **dadurch gekennzeichnet, dass** die Festlagerstelle aus zwei Anlageteilen (118,124) des Polkerns (20) gebildet ist, die zwischen sich einen Aufnahmespalt begrenzen, in dem der freie Endbereich der Aufnahmehülse geklemmt festgelegt ist.

2. Betätigungsvorrichtung nach Anspruch 1, **dadurch gekennzeichnet, dass** das eine Anlageteil aus einer Verengungsstelle (118) des Polkerns (20) gebildet ist, die im Durchmesser kleiner ist als der sonstige Außendurchmesser des Polkerns (20) im Bereich der Festlagerstelle und dass der hieraus entstehende stufenförmige Übergangsbereich (122) eine Stemmfläche (124) als das weitere Anlageteil des Polkerns (20) ausbildet.

3. Betätigungsvorrichtung nach Anspruch 1 oder 2, **dadurch gekennzeichnet, dass** an einer Loslagerstelle (116) für die Aufnahmehülse an dieser ein Rückstellmittel (112) angreift, das eine Kraft auf die Aufnahmehülse ausübt, die von der Festlagerstelle (118,124) weggerichtet ist.

4. Betätigungsvorrichtung nach Anspruch 3, **dadurch gekennzeichnet, dass** die Aufnahmehülse außerhalb des Gehäuses (10) angeordnet ein Bodenteil (36) aufweist, das gegenüber dem Außendurchmesser der Aufnahmehülse verbreitert ist und insoweit an der Stelle der Durchmesseränderung einen Umlenkbereich (116) aufweist, an dem das Rückstellmittel (112) angreift.

5. Betätigungsvorrichtung nach Anspruch 3 oder 4, **dadurch gekennzeichnet, dass** von der Loslagerstelle in Richtung der Festlagerstelle die Aufnahmehülse zylindrisch ausgebildet ist und neben einer Gleitführung für den Magnetanker (22) entlang einer Führungsstrecke (126) unter Anlage mit dem Polkern (20) an diesem anliegt.

6. Betätigungsvorrichtung nach Anspruch 5, **dadurch gekennzeichnet, dass** zwischen der Festlagerstelle und der Führungsstrecke (126) des Polkerns (20) die Aufnahmehülse entlang eines gebogenen Übergangsbereichs (120) mit ihrem freien Endbereich in die Verengungsstelle (118) mündet.

7. Betätigungsvorrichtung nach Anspruch 5 oder 6, **dadurch gekennzeichnet, dass** der Außendurchmesser des Polkerns (20) entlang seiner Führungsstrecke (126) kleiner ist als der Außendurchmesser des Polkerns (20) im Bereich seiner Umfassung durch eine Polplatte (34) und jedenfalls größer als im Bereich der Verengungsstelle (118).

8. Betätigungsvorrichtung nach einem der Ansprüche 1 bis 7, **dadurch gekennzeichnet, dass** der Polkern (20) mit einem nasenartigen Ringvorsprung (60) den Magnetanker (22) in jeder seiner Verfahrstellungen im stirnseitigen Endbereich übergreift unter Bildung einer magnetischen Trennstelle (18), die nach außen hin von der Aufnahmehülse des Polrohr (16) begrenzt ist.

9. Betätigungsvorrichtung nach einem der Ansprüche 1 bis 8, **dadurch gekennzeichnet, dass** entlang ihres gesamten Innenumfanges die Aufnahmehülse frei ist von einem an ihr anliegenden Dichtsystem.

10. Betätigungsvorrichtung nach einem der Ansprüche 1 bis 9, **dadurch gekennzeichnet, dass** die Aufnahmehülse aus einem Edelstahlmaterial gebildet ist.

## Claims

1. An actuating device, in particular for actuating valves that can be connected externally, comprising a housing (10) and a coil body (12) arranged therein and having a coil winding (14), which coil body comprises at least in part a pole tube (16) to one free end of which a pole core (20) is connected, with an armature (22) which is guided such as to be longitudinally displaceable at least in the pole tube (16) within an armature space (24), and which interacts with an actuating part (26) for actuating the respective valve part, the pole tube (16) being designed as a receiving sleeve for the armature (22) that is fixed with its free end region at a fixed bearing point, **characterised in that** the fixed bearing point is formed from two support parts (118, 124) of the pole core (20) which delimit a receiving gap between them in which the free end region of the receiving sleeve is fixed by clamping.

2. The actuating device according to Claim 1, **characterised in that** one support part is formed from a constriction site (118) of the pole core (20) which is smaller in diameter than the remaining outside diameter of the pole core (20) in the region of the fixed bearing point, and that the step-shaped transition region (122) resulting therefrom forms a caulking surface (124) as the other support part of the pole core (20).

3. The actuating device according to Claim 1 or 2, **characterised in that** at a loose bearing point (116) for the receiving sleeve a re-set means (112) acts on the latter and applies a force to the receiving sleeve which is oriented away from the fixed bearing point (118, 124).

4. The actuating device according to Claim 3, **characterised in that** the receiving sleeve located outside of the housing (10) has a bottom part (36) which is widened relative to the outside diameter of the receiving sleeve and at the site of the change in diameter has a deflection region (116) on which the re-set means (112) acts.

5. The actuating device according to Claim 3 or 4, **characterised in that** from the loose bearing point in the direction of the fixed bearing point the receiving sleeve is made to be cylindrical and, in addition to a slide guide for the armature (22) along a guide distance (126) adjoins the pole core (20) in contact with the latter.

6. The actuating device according to Claim 5, **characterised in that** between the fixed bearing point and the guide distance (126) of the pole core (20) the receiving sleeve along a bent transition region (120) with its free end region leads into the constriction site (118).

7. The actuating device according to Claim 5 or 6, **characterised in that** the outside diameter of the pole core (20) along its guide distance (126) is smaller than the outside diameter of the pole core (20) in the region of its enclosure by a pole plate (34) and is in all cases larger than in the region of the constriction site (118).

8. The actuating device according to any of Claims 1 to 7, **characterised in that** the pole core (20) with a lug-like annular projection (60) overlaps the armature (22) in each of its travel positions in the face end region with the formation of a magnetic separation point (18) which is delimited to the outside by the receiving sleeve of the pole tube (16).

9. The actuating device according to any of Claims 1 to 8, **characterised in that** along its entire inner periphery the receiving sleeve is free of a sealing system which adjoins it.

10. The actuating device according to any of Claims 1 to 9, **characterised in that** the receiving sleeve is formed from a high-grade steel material.

## Revendications

1. Dispositif d'actionnement, notamment pour actionner des soupapes pouvant être raccordées du côté extérieur, comprenant un boîtier (10) et un corps (12) de bobine, qui y est disposé, qui a un enroulement (14) et qui comprend, au moins en partie, un tube (16) polaire, à l'une des extrémités libres duquel se raccorde un noyau (20) polaire, comprenant une armature (22) d'aimant guidée de manière à pouvoir se déplacer longitudinalement, au moins dans le tube (16) polaire, dans un espace (24) d'armature, laquelle coopère avec une partie (26) d'actionnement pour l'actionnement de la partie de soupape, le tube (16) polaire étant constitué à la manière d'un manchon de réception de l'armature (22) d'aimant, manchon qui est fixé en une position d'appui fixe par sa partie d'extrémité libre, **caractérisé en ce que** la position d'appui fixe est formée de deux parties (118, 124) d'application du noyau (20) polaire, qui délimitent entre elles une fente de réception, dans laquelle est fixé, de manière serrée, la partie d'extrémité libre du manchon de réception.

2. Disposition d'actionnement suivant la revendication 1, **caractérisé en ce que** l'une des parties d'application est formée d'un point (118) de rétrécissement du noyau (20) polaire, dont le diamètre est plus petit que le diamètre extérieur du reste du noyau (20) polaire dans la région du point d'appui fixe et **en ce que** la région (122) de transition en forme de palier ainsi créée constitue, sous la forme de l'autre partie d'application du noyau (20) polaire, une surface (124) de matage.

3. Disposition d'actionnement suivant la revendication 1 ou 2, **caractérisé en ce qu'**en un point (116) d'appui libre pour le manchon de réception, celui-ci est attaqué par un moyen (112) de rappel, qui applique au manchon de réception une force dirigée en s'éloignant du point (118, 124) d'appui fixe.

4. Disposition d'actionnement suivant la revendication 3, **caractérisé en ce que** le manchon de réception a, disposé à l'extérieur du manchon (10), une partie (36) de fond, qui est élargie par rapport au diamètre extérieur du manchon de réception et, dans cette mesure, a, au point de modification du diamètre, une région (116) de déviation qu'attaque le moyen (112) de rappel.

5. Disposition d'actionnement suivant la revendication 3 ou 4, **caractérisé en ce que** le manchon de réception est, du point d'appui libre au point d'appui fixe, constitué de manière cylindrique et, outre un guidage à glissement pour l'armature (22) d'aimant le long d'une section (126) de guidage, s'applique au noyau (20) polaire en étant en contact avec celui-ci.

6. Disposition d'actionnement suivant la revendication 5, **caractérisé en ce que**, entre le point d'appui fixe et la section (126) de guidage du noyau (20) polaire, le manchon de réception débouche, le long d'une région (120) de transition courbée, par sa partie d'extrémité libre au point (118) de rétrécissement.

7. Disposition d'actionnement suivant la revendication 5 ou 6, **caractérisé en ce que** le diamètre extérieur du noyau (20) polaire, le long de sa section (126) de guidage, est plus petit que le diamètre extérieur du noyau (20) polaire dans la région où il est entouré d'une plaque (34) polaire et en tout cas plus grand que dans la région du point (118) de rétrécissement.

8. Disposition d'actionnement suivant l'une des revendications 1 à 7, **caractérisé en ce que** le noyau (20) polaire enjambe, par une saillie (30) annulaire de type à bec, l'armature (22) d'aimant dans chacune de ses positions de déplacement dans la région d'extrémité du côté frontal, avec formation d'un point (18) de séparation magnétique, qui est délimité vers l'extérieur par le manchon de réception du tube (16) polaire.

9. Disposition d'actionnement suivant l'une des revendications 1 à 8, **caractérisé en ce que**, le long de tout son pourtour intérieur, le manchon de réception est exempt de tout système d'étanchéité s'y appliquant.

10. Disposition d'actionnement suivant l'une des revendications 1 à 9, **caractérisé en ce que** le manchon de réception est en un matériau en acier fin.
